(19) Europäisches Patentamt
European Patent Office
Office européen des brevets

(11) **EP 1 998 019 A1**

(12) **EUROPEAN PATENT APPLICATION**
published in accordance with Art. 158(3) EPC

(43) Date of publication:
**03.12.2008 Bulletin 2008/49**

(51) Int Cl.:
*F01P 7/16* (2006.01)     *F16K 31/68* (2006.01)

(21) Application number: **07737320.7**

(22) Date of filing: **22.02.2007**

(86) International application number:
**PCT/JP2007/053327**

(87) International publication number:
**WO 2007/108273 (27.09.2007 Gazette 2007/39)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.03.2006 JP 2006075454**
**15.09.2006 KR 20060089388**

(71) Applicants:
• **Fuji Bellows Co., Ltd**
**Yamato-shi**
**Kanagawa 242-0012 (JP)**

• **Corea Electronics Corporation**
**Chungcheongbuk-do 380-250 (KR)**

(72) Inventor: **PARK, Hee Wan**
**Seoul 137-070 (KR)**

(74) Representative: **Boff, James Charles et al**
**Phillips & Leigh**
**5 Pemberton Row**
**London EC4A 3BA (GB)**

(54) **THERMOSTAT APPARATUS**

(57)     An apparatus comprising a movable temperature sensing member (39) capable of sensing mainly the temperature of high-temperature coolant flowing in from a high-temperature coolant port (33) and driving toward the side of the high-temperature coolant port (33) in dependence upon the sensed temperature; a main valve (36) fitted integrally to the movable temperature sensing member (39) and constructed so as to render a low-temperature coolant port (31) and a mixing compartment (32) openable in conformity to the driving of the movable temperature sensing member (39) toward the side of the high-temperature coolant port (33), thereby controlling the inflow rate of low-temperature coolant from the low-temperature coolant port (31) to the mixing compartment (32); and a high-temperature coolant inducing part (42) communicating with the high-temperature coolant port (33) and adapted to regulate the flow of high-temperature coolant from the high-temperature coolant port (33) toward the surround of the movable temperature sensing member (39) and effect outflow thereof to the mixing compartment (32).

Fig. 1

**Description**

[Technical Field]

The present invention relates to a thermostat apparatus, which automatically controls the temperature of a coolant mainly cooling an engine of a vehicle.

[Background Art]

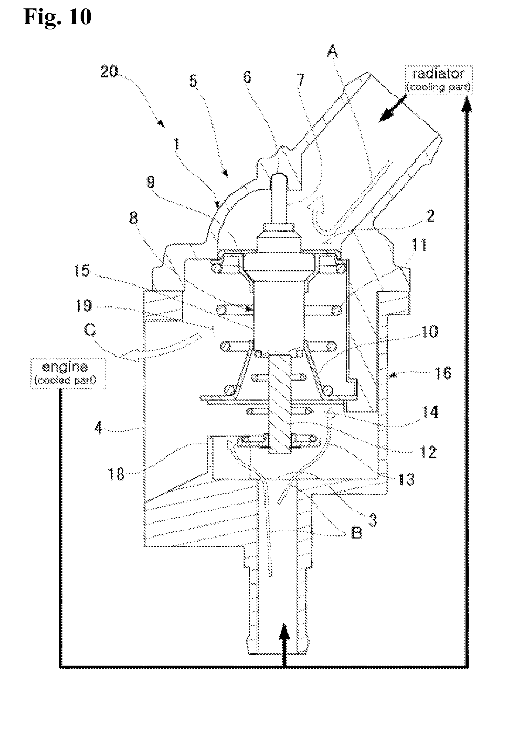

As shown in FIG. 10, a conventional thermostat apparatus 20 includes a housing main body 16 having a low-temperature coolant port 2, through which a low-temperature coolant A cooled by a cooling part, such as a radiator, flows into a mixing chamber 19; a high-temperature coolant port 3, formed opposite to the low-temperature coolant port 2, through which a high-temperature coolant B heated by an engine (heating part) flows into the mixing chamber 19; and a coolant discharge port 4, through which a coolant C obtained by mixing the coolants flowing from the low-temperature coolant port 2 and the high-temperature coolant port 3 is discharged to the engine. The thermostat apparatus 20 further includes a piston shaft 7 supported by a piston shaft supporting part 6 formed on a housing cover 1 and disposed toward the high-temperature coolant port 3; a movable temperature sensing member 8, which is a thermal expansion element fixed to the piston shaft 7 and moving according to the temperature of the coolant in the mixing chamber 19; a main valve 9 moving integrally with the movable temperature sensing member 8 supported and guided by the piston shaft 7 to control the inflow amount of the low-temperature coolant A from the low-temperature coolant port 2 to the mixing chamber 19; an fixing frame 10 supported by a portion of the housing cover 1 spaced from the main valve 9; a main spring 11 disposed between the main valve 9 and the fixing frame 10 to elastically support the main valve 9 toward the low-temperature coolant port 2; a bypass shaft 12 extended from the movable temperature sensing member 8 toward the high-temperature coolant port 3; a bypass valve 13 disposed on the bypass shaft 12 to close the high-temperature coolant port 3 or moving integrally with the movable temperature sensing member 8 to control the inflow amount of the high-temperature coolant B from the high-temperature coolant port 3 to the mixing chamber 19; and a bypass spring 14 disposed between the bypass valve 13 and the movable temperature sensing member 8 to elastically support the bypass valve 13 toward the high-temperature coolant port 3.

When the temperature of the coolant around the movable temperature sensing member 8 is raised, the volume of a thermally expandable material sealed in a cup 15 expands according to the temperature of the coolant around the movable temperature sensing member 8, and thus pushes the piston shaft 7. Since the piston shaft 7 is fixed so as not to move, the movable temperature sensing member 8 moves against the piston shaft 7. The main valve 9 fixed to the movable temperature sensing member 8 is opened contrary to the elastic force of the main spring 11 to increase the inflow amount of the low-temperature coolant A, and the bypass valve 13 is closed to decrease the inflow amount of the high-temperature coolant B.

On the other hand, when the temperature of the coolant around the movable temperature sensing member 8 is lowered, the volume of the thermally expandable material contracts according to the temperature of the coolant around the movable temperature sensing member 8. Thus, the piston shaft 7 is inserted into the movable temperature sensing member 8 by the elastic force of the main spring 11 and the main valve 9 moves in a closing direction to decrease the inflow amount of the low-temperature coolant A but increase the inflow amount of the high-temperature coolant B.

By the above operation, the conventional thermostat apparatus 20 senses the coolant C, i.e., the mixture of the high-temperature coolant B and the low-temperature coolant A from a radiator, and thus controls the coolant C such that the coolant C maintains a regular temperature, and supplies the coolant C to the engine.

Thermostat apparatuses having the same or similar structure as that of the above thermostat apparatus are disclosed in references 1 to 4 below:

Reference 1: Japanese Utility Model Laid-open Publication No. H2-5672
Reference 2: Japanese Utility Model Laid-open Publication No. H6-37524
Reference 3: Japanese Patent Laid-open Publication No. H10-19160
Reference 4: Japanese Patent Publication No. S47-16584

The above-described conventional thermostat apparatuses have drawbacks, as follows.

(1) Since the high-temperature coolant port 3 and a deflector 18 are distant from the movable temperature sensing member 8 in the mixing chamber 19, it is difficult to cause the high-temperature coolant B to reach a mixing part (the periphery of the movable temperature sensing member 8). Thus, the low-temperature coolant A and the high-temperature coolant B cannot be effectively mixed at the movable temperature sensing member 8, and the movable temperature sensing member 8 cannot effectively sense the temperature of the coolant C. As a result, the temperature of the coolant C cooling the engine is unstable, and a temperature control width according to a engine load variation is increased.

Further, in case that a coolant returned from a heater for a vehicle passenger compartment flows into the mixing chamber 19, a mixing efficiency in the mixing chamber 19 is gradually deteriorated, and thus the above drawback is gradually increased.

Further, the capacity to sense the temperature of the high-temperature coolant B is lowered, and a possibility of overshoot is increased when the overall temperature of a cooling system is raised.

Since the temperature of the coolant has an upper limit, the temperature of the coolant must be generally lowered to a comparatively low value, and thus may cause lowering of the combustion efficiency of the engine or increase in fuel expenses due to increase of friction and heat losses of the engine.

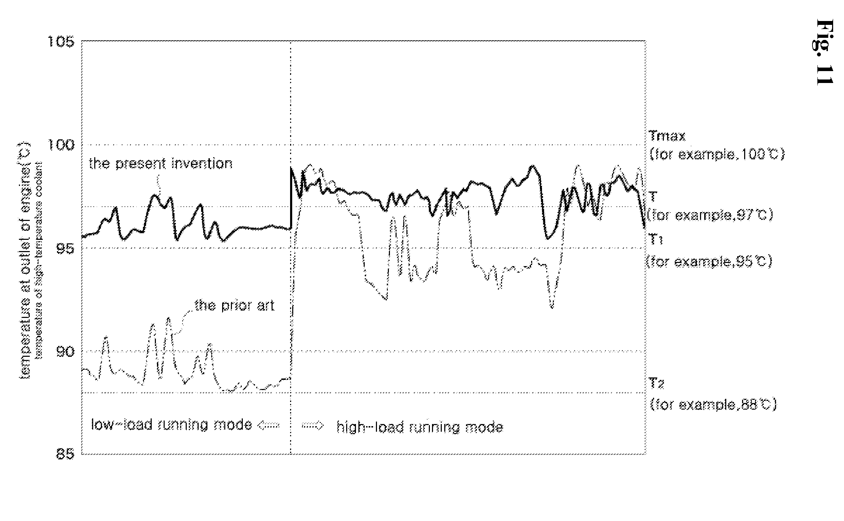

Further, as shown in FIG. 11, in the conventional thermostat apparatus, a temperature control width is increased according to an engine load variation, and thus thermal expansion and contraction of the engine is increased. When this variation is frequently generated, the life span of the engine is shortened due to the increase of stresses of the engine and the performance of the engine is lowered due to a temperature difference when the temperature is lowered.

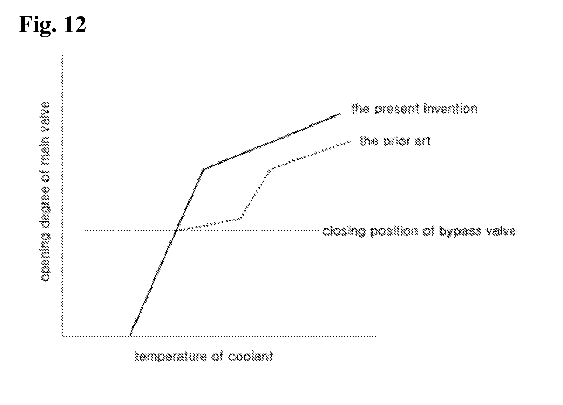

(2) When the high-temperature coolant B is blocked and circulated to the radiator, the bypass valve 13 is pressed onto the high-temperature coolant port 3 by the bypass spring 14. However, the force of the bypass spring 14 serves as a load to the movable temperature sensing member 8. When the load to the movable temperature sensing member 8 is large, the life span of the movable temperature sensing member 8 is inevitably shortened. Further, since pressure applied to the thermally expandable material is increased, the melting point of the thermally expandable material is raised, and thus a coolant having a higher temperature is required to open the main valve 9 more widely. That is, when the temperature of the coolant C is raised and the opening of the main valve 9 more widely is required, a required opening degree of the main valve 9 cannot be obtained with characteristics of the conventional thermostat apparatus, as shown in FIG. 12.

(3) When the high-temperature coolant port 3 is closed, the high-temperature coolant port 3 is rapidly closed, and thus temperature hunting occurs just after the closing of the high-temperature coolant port 3 and the temperature of the coolant C does not become stable.

(4) In the conventional thermostat apparatus, the bypass valve 13 is a flat circular plate, which contacts the front surface of the high-temperature coolant port 3 to close the high-temperature coolant port 3. Further, when the main valve 9 is closed, a distance between the bypass valve 13 and the high-temperature coolant port 3 is determined by three factors, i.e., (a) the securing of the passage area of the high-temperature coolant port 3 when the main valve 9 is closed, (b) the prevention of the adhesion between spring coils of the bypass spring 14 when the movable temperature sensing member 8 moves again due to the raising of the temperature of the coolant C after the bypass valve 13 is closed, and (c) the prevention of the contact between the bypass valve 13 and the movable temperature sensing member 8.

That is, it is necessary to increase the distance between the bypass valve 13 and the high-temperature coolant port 3 when the main valve 9 is closed.

Thus, a complicated structure, such as the deflector 18, to induce the high-temperature coolant B in the direction of the movable temperature sensing member 8 is required.

[Disclosure]

[Technical Problem]

Therefore, the present invention has been made in view of the above problems, and it is an object of the present invention to provide a thermostat apparatus, which maintains the temperature of a coolant of an engine of a vehicle more highly than a conventional thermostat apparatus, and thus precisely controls the temperature of the coolant. Thereby, combustion efficiency of the engine is enhanced, a friction loss of the engine is reduced, and fuel expenses of the engine are lowered.

It is another object of the present invention to provide a thermostat apparatus, which stably operates an engine of a vehicle and lengthens the life span of the engine, while precisely controlling the temperature of a coolant of the engine.

[Technical Solution]

In accordance with an aspect of the present invention, the above and other objects can be accomplished by the provision of a thermostat apparatus having a low-temperature coolant port, through which a low-temperature coolant cooled by a cooling part, i.e., a radiator, flows into a mixing chamber; a high-temperature coolant port, through which a high-temperature coolant heated by a cooled part, i.e., an engine, flows into the mixing chamber; and a coolant discharge port, through which a coolant obtained by mixing the low-temperature coolant and the high-temperature coolant in the mixing chamber is discharged to the engine, comprising

a piston shaft provided with one end fixed to a piston shaft supporting part disposed at the side of the low-temperature coolant port, and the other end extended to the high-temperature coolant port;

a movable temperature sensing member fixed to the other end of the piston shaft to sense the temperature of the high-temperature coolant flowing from the high-temperature coolant port and move toward the high-temperature coolant port based on the sensed temperature;

a main valve fixed integrally with the movable temperature sensing member to connect the low-temperature coolant port and the mixing chamber according to the movement of the movable temperature sensing member toward the high-temperature coolant port and thus control the amount of the low-temperature coolant flowing from the low-temperature coolant port into the mixing chamber; and

a high-temperature coolant inducing part connected to the high-temperature coolant port to induce the high-temperature coolant from the high-temperature coolant port to the periphery of the movable temperature sensing member and then discharge the high-temperature coolant to the mixing chamber.

[Advantageous Effects]

As apparent from the above description, the present invention has effects, as below.

The high-temperature coolant inducing part is connected to the high-temperature coolant port, and thus causes the high-temperature coolant from the high-temperature coolant port to reliably contact the periphery (bottom and side surfaces) of the movable temperature sensing member without highly decreasing temperature or flowing speed of the high-temperature coolant such that thermal conduction is achieved. The high-temperature coolant inducing part surrounds the entire or a portion of the movable temperature sensing member, and is provided with an opening part at a position adjacent to the movable temperature sensing member to form a circulation passage of the high-temperature coolant from the inside of the high-temperature coolant inducing part to a clearance between the high-temperature coolant inducing part and the movable temperature sensing member, and allow the high-temperature coolant to flow around the movable temperature sensing member.

In the present invention, the operation of the movable temperature sensing member can be controlled nearly only using the temperature of the high-temperature coolant. The temperature domination rate of the high-temperature coolant to the movable temperature sensing member is sufficiently increased, and thus the operating state of the movable temperature sensing member influenced by the temperature of the high-temperature coolant is effectively controlled.

Even in case that a coolant returned from a circuit for a passenger compartment heater flows into the mixing chamber, the high-temperature coolant passed through the high-temperature coolant inducing part blocks the coolant toward the passenger compartment heater and thus the temperature domination rate of the high-temperature coolant to the movable temperature sensing member is maintained.

Here, 'the temperature domination rate of the high-temperature coolant to the movable temperature sensing member' is defined as a coefficient (a) in expression below.

$$\text{temperature sensed by the movable temperature sensing member} = a *$$
$$(\text{temperature of high-temperature coolant}) + b * (\text{temperature of low-temperature}$$
$$\text{coolant})$$

Even in case that the coolant from the passenger compartment heater using heat of the coolant flows into the mixing chamber, above expression is basically satisfied.

Thus, the thermostat apparatus of the present invention, which senses mainly the low temperature of the coolant (the high-temperature coolant B) at the outlet of an engine, and supplies a coolant C having a controlled temperature to the engine to uniformly maintain the temperature of the high-temperature coolant B, is converted from a conventional thermostat apparatus, which senses mainly the temperature of a mixture, i.e., the coolant C, uniformly controls the temperature of the coolant C, and then supplies the coolant C to an engine.

The above conversion is achieved without change in positions of components of a cooling system, and is achieved also even in a widespread conventional cooling system without change in design of the cooling system.

In a general cooling system, the temperature of a coolant has an upper limit. Thus, the temperature of the coolant must be controlled such that the temperature cannot exceed the upper limit. In a cooling system mounted on a vehicle, a coolant at the outlet of an engine is a high-temperature coolant. Conventionally, the temperature of the coolant supplied to the engine is lowered in advance such that the temperature of the coolant (high-temperature coolant) at the outlet of the engine cannot exceed an allowable range on various driving conditions. However, in the present invention, as described above, the temperature of the coolant at the outlet of the engine is directly sensed, and thus the temperature of the coolant can be set up to the allowable range. Since the temperature of the coolant supplied to the engine is raised or lowered, if necessary, to be stably maintained nearby the upper limit of the allowable range, the mean temperature of the coolant in the engine can be set to a higher value than that of the conventional thermostat apparatus.

Thereby, the combustion efficiency of the engine is raised and the friction and heat losses of the engine are lowered, and thus the fuel expenses of the engine are lowered. Further, the capacity of the passenger compartment heater is enhanced.

Based on the above effects, it is possible to stabilize the temperature of the high-temperature coolant to overcome the instability of the temperature of the coolant cooling the engine, and to achieve stable control of the temperature of the coolant based on the temperature of the high-temperature coolant. Therefore, thermal expansion and contraction of the engine due to a variation of the temperature of the coolant is suppressed, and thus stresses applied to the engine are reduced.

The above effect is understood from temperature characteristics of the coolant during driving of a vehicle, obtained in the present invention, as shown in FIG. 11.

Data shown in FIG. 11 were obtained in a case that a conventional thermostat apparatus is mounted on a vehicle and a case that a thermostat apparatus of the present invention is mounted on the same vehicle. Here, variations of the temperature of the coolant (high-temperature coolant) at the outlet of an engine are recorded when the thermostat apparatuses were tested in the same running mode on condition that other conditions were equal

In the vehicle behaving, as shown in FIG. 11, in order to drive the engine with the highest efficiency and low fuel expenses, the ideal value of the temperature of the coolant at the outlet of the engine in the cooling system is $T°C$ (for example 97°C). That is, it is ideal that the engine is driven at a regular temperature, i.e., 97 °C, of the coolant at the outlet.

In the conventional thermostat apparatus, the temperature of the coolant at the outlet of the engine has a variation of $T_{max}°C$ (for example, 100°C)~$T_2°C$ (for example, 88 °C). The variation of the temperature of the coolant at the outlet of the engine primarily synchronizes with the load state of the engine, and is secondarily influenced by an unstable variation of the temperature of the coolant around the movable temperature sensing member sensing the temperature of the coolant, caused by an unstable variation of the mixing state between a low-temperature coolant and a high-temperature coolant due to a variation of the flowing state of the coolant in a housing.

On the other hand, in the thermostat apparatus of the present invention, the temperature of the coolant at the outlet of the engine has a stable variation of $T_{max}°C$ (for example, 100 °C)~$T_1°C$ (for example, 95 °C).

The temperature of the coolant at the outlet of the engine is an index showing the cooling necessity of the engine. Due to the above effect, the control of the temperature of the coolant at the outlet of the engine through directly sensing enhances the corresponding responsiveness of the thermostat apparatus to the necessary cooling amount. The thermostat apparatus of the present invention overcomes the generation of overshoot of the cooling system, which was conventionally generated due to the poor capacity to sensing the temperature of the high-temperature coolant when the overall temperature of the cooling system is raised.

Further, even in case that the amount of the high-temperature coolant flowing in the circuit of the cooling system is reduced, the thermostat apparatus of the present invention has a high degree of sensitivity to the temperature of the high-temperature coolant, and thus sufficiently exhibits its functions.

In respect of the position relation between the high-temperature coolant inducing part and the movable temperature sensing member, the high-temperature coolant inducing part has a structure such that the piston shaft is extended and the movable temperature sensing member is put into the inside of the high-temperature coolant inducing part to raise the temperature domination rate of the high-temperature coolant to the movable temperature sensing member when the temperature of the high-temperature coolant is raised, and the piston shaft is contracted and the movable temperature sensing member is taken out of the inside of the high-temperature coolant inducing part to lower the temperature domination rate of the high-temperature coolant to the movable temperature sensing member when the temperature of the high-temperature coolant is lowered. Thereby, the responsiveness of the movable temperature sensing member to the temperature of the high-temperature coolant is mechanically improved.

Due to the above effect, the thermostat apparatus of the present invention does not require any complicated structure such as the deflector 18, which was described in the drawback (4) of the conventional thermostat apparatus.

Since the main valve 9 of the conventional thermostat apparatus tilts in a designated direction according to the position of the wiring end of the main spring 11, and starts to be opened, characteristics of the conventional thermostat apparatus in the cooling system is varied according to the position of the wiring end of the main spring. On the other hand, since the high-temperature coolant inducing part sufficiently blocks the influence of the low-temperature coolant flowed from the main valve on the movable temperature sensing member, characteristics of the thermostat apparatus of the present invention in the cooling system is rarely varied according to the position of the wiring end of the main spring. Further, as disclosed in claim 3, the tilt of the main valve can be suppressed.

By installing the high-temperature coolant inducing part, it is possible to add a function of restricting the passage of the high-temperature coolant to the thermostat apparatus, and thus only a single elastic support unit is used to press and elastically support the main valve to the low-temperature coolant port without requiring the bypass spring 14 the conventional thermostat apparatus to push the bypass valve 13 to the high-temperature coolant port 3.

Further, by installing the high-temperature coolant inducing part, the single elastic support unit is supported by an elastic support unit support disposed at the outside of the high-temperature coolant inducing part or between the main body of the movable temperature sensing member and the piston shaft, and presses the main value to the low-temperature coolant port. Thereby, any elastic support unit does not exist in a region between the high-temperature coolant inducing part and the main body of the movable temperature sensing member.

Thus, the thermostat apparatus effectively exhibits a function due to the structure of the high-temperature coolant inducing part. The use of 'only the single elastic support unit' causes a load, applied to press the piston shaft to the inside of the movable temperature sensing member, to be reduced with the elastic support force of only the single elastic support unit.

FIG. 12 comparatively illustrates the temperature of the coolant and the opening degree of the main valve in the conventional thermostat apparatus and the thermostat apparatus of the present invention to show the above effect by the elastic support force.

That is, in the conventional thermostat apparatus, after the high-temperature coolant port is closed by the bypass valve, the double elastic support force of the main spring and the bypass spring is applied and pressure applied to the thermally expandable material in the movable temperature sensing member is high and thus the melting point of the expandable material is raised. In order to increase the opening degree of the main valve, the higher temperature of the coolant is required, and thus the opening degree of the main valve according to the temperature of the coolant is changed at transformation points, as shown in FIG. 12. On the other hand, in the thermostat apparatus of the present invention, the elastic support force of the single elastic support unit is applied, and thus the opening degree of the main valve is smoothly changed according to the temperature of the coolant, as shown in FIG. 12, and the temperature of the coolant is more precisely controlled. Further, the opening degree of the main valve is increased at a relatively low temperature of the coolant, the cooling capacity of the radiator is sufficiently obtained when the temperature of the coolant is raised, and overshoot of the temperature of the coolant is prevented.

Further, the life span of the movable temperature sensing member is lengthened by the reduction of a load applied to the movable temperature sensing member due to the reduction of the elastic support force.

Further, since the load applied to the movable temperature sensing member is decreased, the movable temperature sensing member may have a small size. The miniaturization of the movable temperature sensing member enhances responsiveness (follow-up to a variation of temperature) and thus more stably control the temperature of the coolant, and having a cost-saving effect.

Further, as disclosed in claim 3, a coaxial structure including the piston shaft, the movable temperature sensing member, and its extension shaft is supported by a two point support method in which the structure is supported at two points with the piston shaft supporting part and the sliding guide separated from the piston shaft supporting part, and the side surface of the movable temperature sensing member is not guided but the extension shaft of the movable temperature sensing member is guided by the sliding guide, thereby reducing a clearance between the high-temperature coolant inducing part and the extension shaft of the movable temperature sensing member, and thus reducing the rolling width of the movable temperature sensing member due to vibration of the engine, pulsation of the coolant, and running vibration.

Thereby, the movable temperature sensing member and the main valve are smoothly operated and stresses applied thereto are reduced, and thus the life span of the thermostat apparatus is increased.

[Description of Drawings]

The above and other objects, features and other advantages of the present invention will be more clearly understood from the following detailed description taken in conjunction with the accompanying drawings, in which:

FIG. 1 illustrates cross-sectional views showing the overall structure of a thermostat apparatus in accordance with the present invention;
FIG. 2 illustrates cross-sectional views showing a diameter reducing part formed on the inner wall of a high-temperature coolant inducing part;
FIG. 3 illustrates cross-sectional views showing a sliding guide to support and guide the side surface of a movable temperature sensing member;
FIG. 4 illustrates cross-sectional views showing a high-temperature coolant inducing part formed under the sliding guide;
FIG. 5 illustrates cross-sectional views showing another embodiment of the thermostat apparatus in accordance with the present invention;
FIG. 6 illustrates cross-sectional views showing a piston shaft firmly fixed to a piston shaft supporting part;
FIG. 7 illustrates cross-sectional views showing a guide tube disposed around the movable temperature sensing member;
FIG. 8 is a cross-sectional view showing a deflector extended to a main valve;
FIG. 9 illustrates cross-sectional views showing the overall structure of a thermostat apparatus, which is applied to outlet control;
FIG. 10 is a cross-sectional view showing the structure of a conventional thermostat apparatus;
FIG. 11 is a graph illustrating a variation of a temperature at an outlet of an engine according to respective load running modes; and
FIG. 12 is a graph illustrating a variation of an opening degree of a main valve according to temperatures of a coolant.

[Best Mode]

Now, a thermostat apparatus in accordance with preferred embodiments of the present invention, which is applied to control of the temperature of a coolant of an engine of a vehicle, will be described in detail with reference to the annexed drawings.

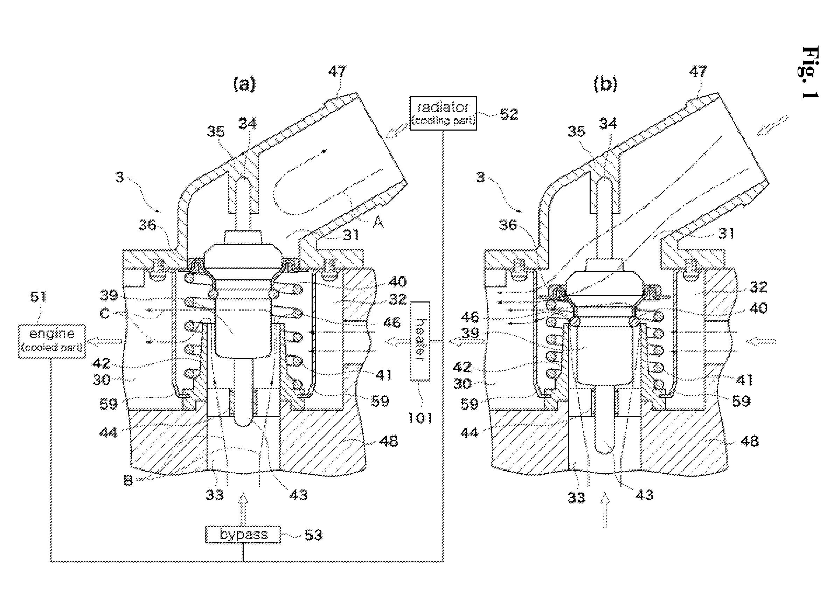

FIG. 1a shows the overall structure of a thermostat apparatus 3 in accordance with the present invention. The thermostat apparatus 3 is applied to an inlet control method in which a low-temperature coolant A cooled by a radiator 52 and a high-temperature coolant B supplied from an engine 51 (cooled part) through a bypass 53 are flowed into the thermostat apparatus, and their mixture ratio is adjusted such that the temperature of a coolant C flowing into the engine 51 is controlled.

That is, such a control system includes a high-temperature coolant port 33, to which the high-temperature coolant B passed through the engine 51 is supplied through the bypass 53, and a low-temperature coolant port 31, to which the low-temperature coolant A, obtained by cooling a portion of the high-temperature coolant B passed through the engine 51 through the radiator 52, is supplied from the radiator 52, and a mixing chamber 32, into which the low-temperature coolant A from the low-temperature coolant port 31 and the high-temperature coolant B from the high-temperature coolant port 33 are flowed. The low-temperature coolant A and the high-temperature coolant B are mixed in the mixing chamber 32, and thus produce the coolant C. The coolant C is supplied to the engine 51 through a coolant discharge port 30.

The thermostat apparatus 3 is characterized in that the operating state of a movable temperature sensing member is sensed nearly only using the temperature of the high-temperature coolant B and the temperature of the high-temperature coolant B flowed out of the engine 51 is uniformly maintained.

Further, a heater 101 for a passenger compartment is installed on the way from the bypass 53 to the radiator 52.

In order to perform the above control, a housing of the thermostat apparatus 3 includes a housing main body 48, and a housing cover 47 assembled with the housing main body 48. The housing main body 48 includes the high-temperature coolant port 33, the mixing chamber 32, and the coolant discharge port 30. Further, the low-temperature coolant port 31 is formed through the housing cover 47. The housing main body 48 and the housing cover 47 are formed by molding using aluminum or plastic.

The thermostat apparatus 3 includes a piston shaft supporting part 35 disposed at the side of the low-temperature coolant port 31, a piston shaft 34 provided with one end fixed to the piston shaft supporting part 35 and the other end extended to the high-temperature coolant port 33, a movable temperature sensing member 39 fixed to the other end of the piston shaft 34, a main valve 36 fixed integrally with the movable temperature sensing member 39, an elastic support member 41 having a spring elastically supporting the main valve 36 toward the low-temperature coolant port 31, a cylindrical high-temperature coolant inducing part 42 protruding from the high-temperature coolant port 33 toward the mixing chamber 32 and connected to the high-temperature coolant port 33 through an opening part 46 formed from the high-temperature coolant port 33 toward the mixing chamber 32, and a supporting and guiding part 44 formed in the high-temperature coolant port 33.

The movable temperature sensing member 39 includes a cup, a thermally expandable material sealed in the cup, and a sleeve, a cap, and a seal, which are not shown and are disposed between the piston shaft 37 and the thermally expandable material. The thermally expandable material of the movable temperature sensing member 39 senses the high-temperature coolant B, and thereby is increased in volume, and thus the movable temperature sensing member 39 moves in upward and downward directions along the piston shaft 34. Here, the upward direction means a direction to the low-temperature coolant port 31, and the downward direction means a direction to the high-temperature coolant port 33. These directions are equal in the below description.

The high-temperature coolant inducing part 42 has a shape protruding upwardly from the high-temperature coolant port 33 toward the low-temperature coolant port 31. The high-temperature coolant inducing part 42 may be made of plastic, but is not limited thereto. The upper end of the high-temperature coolant inducing part 42 is located at a higher position than that of the lower end of the movable temperature sensing member 39, as shown in FIG. 1a. As a result, the lower end of the movable temperature sensing member 39 is inserted into the cylindrical high-temperature coolant inducing part 42.

Further, the high-temperature coolant inducing part 42 is designed to have an inner diameter larger than the outer diameter of the movable temperature sensing member 39. Thus, when the lower end of the movable temperature sensing member 39 is inserted into the high-temperature coolant inducing part 42, there is a clearance between the inner wall of the high-temperature coolant inducing part 42 and the outer wall of the movable temperature sensing member 39 and thus the lower end of the movable temperature sensing member 39 can be loosely inserted into the high-temperature coolant inducing part 42.

Then, the above-described elastic support member 41 is fixed to the outer circumferential surface of the high-temperature coolant inducing part 42. Further, a frame 59 is fixed to the high-temperature coolant inducing part 42. The lower portion of the frame 59 is buried into the lower region of the outer portion of the high-temperature coolant inducing part 42, and the upper portion of the frame 59 is fixed to the lower end of the housing cover 47 by screws. In case that the housing main body 48 is an engine block, it is preferable that the upper portion of the frame 59 is fixed to the housing cover 47 and thus the frame 59 has a shape, as shown in FIG. 1. However, the frame 59 may be omitted.

An extension shaft 43 is extended from the lower end of the movable temperature sensing member 39 toward the high-temperature coolant port 33. The supporting and guiding part 44 to support and guide the extension shaft 43 is formed in the high-temperature coolant port 33. A through hole, through which the extension shaft 43 passes so that the extension shaft 43 is supported by the supporting and guiding part 44, is formed through the supporting and guiding part 44. The edge of the supporting and guiding part 44 is attached and fixed to the inner wall of the high-temperature coolant port 33. A guide hole (not shown) is formed through the supporting and guiding part 44 such that the high-temperature coolant B from the high-temperature coolant port 33 can be flowed into the mixing chamber 32 through the guide hole. The supporting and guiding part 44 can support the extension shaft 43 extended from the lower end of the movable temperature sensing member 39, and stably achieve the movement of the movable temperature sensing member 39 in the upward and downward directions.

Next, the operation of the above thermostat apparatus 3 will be described. In case that the high-temperature coolant B heated by the engine 51 is supplied to the high-temperature coolant port 33, the high-temperature coolant B is supplied to the high-temperature coolant inducing part 42 through the supporting and guiding part 44. The high-temperature coolant inducing part 42 induces the supplied high-temperature coolant B to the periphery of the movable temperature sensing member 39. That is, the high-temperature coolant inducing part 42 induces the high-temperature coolant B along the inner wall of the cylindrical high-temperature coolant port 33. As a result, the high-temperature coolant B is guided in the direction of the arrow, as shown in FIG. 1. Further, the movable temperature sensing member 39 is inserted in advance into the high-temperature coolant inducing part 42, and a designated clearance is formed between the movable temperature sensing member 39 and the high-temperature coolant inducing part 42. Thus, the high-temperature coolant B flows into the mixing chamber 32 through the clearance formed between the movable temperature sensing member 39 and the high-temperature coolant inducing part 42. Thereby, the high-temperature coolant B can be induced and guided to the periphery of the movable temperature sensing member 39 such that the high-temperature coolant B contacts the periphery of the movable temperature sensing member 39. Further, the movable temperature sensing member 39 effectively senses the temperature of the high-temperature coolant B. The movable temperature sensing member 39 may contact coolants other than the high-temperature coolant B. However, in the present invention, the movable temperature sensing member 39 mainly contacts the high-temperature coolant B, and thus it is possible to move the movable temperature sensing member 39 according to the temperature of the high-temperature coolant B.

Further, the high-temperature coolant B flowing from the opening part 46 into the mixing chamber 32 is guided to the periphery of the movable temperature sensing member 39, and thus turns around the movable temperature sensing member 39.

When the movable temperature sensing member 39 contacts the high-temperature coolant B, the volume of the thermally expandable material of the movable temperature sensing member 39 is increased, and thus force to push the piston shaft 34 is applied to the piston shaft 34. However, since the upper end of the piston shaft 34 is fixed to the piston shaft supporting part 35, as described above, when force to push the piston shaft 34 is applied to the piston shaft 34, the movable temperature sensing member 39 is moved toward the high-temperature coolant port 33 by the counter force, as shown in FIG. 1b. Here, the main valve 36 fixed integrally with the movable temperature sensing member 39 is moved also to the high-temperature coolant port 33 according to the movement of the movable temperature sensing member 39.

Further, since the main valve 36 is elastically supported by the elastic support member 41 toward the low-temperature coolant port 31, the low-temperature coolant port 31 and the mixing chamber 32 are isolated from each other when the movable temperature sensing member 39 is not operated. In case that the high-temperature coolant B is supplied to the mixing chamber 32, the movable temperature sensing member 39 moves to the high-temperature coolant port 33, and the main valve 36 is opened contrary to the force of the elastic support member 41. As a result, the inflow amount of the low-temperature coolant A from the low-temperature coolant port 31 into the mixing chamber 32 is increased. That is, by the above-described operation, the thermostat apparatus 3 controls the mixture ratio of the high-temperature coolant B from the engine 51 and the low-temperature coolant A from the radiator 52, and controls the temperature of the coolant C to be supplied to the engine 51 through the coolant discharge port 30.

Further, since the high-temperature coolant B is guided to the movable temperature sensing member 39, even in case that a coolant returned from the heater 101 for the passenger compartment is supplied to the mixing chamber 32, the thermostat apparatus 3 of the present invention senses mainly the temperature of the high-temperature coolant B without influence of the temperature of the coolant supplied from the heater 101 for the passenger compartment.

In the present invention, a protrusion 40 corresponding to the clearance between the movable temperature sensing member 39 and the high-temperature coolant inducing part 42 is preferably formed on the outer circumferential surface of the movable temperature sensing member 39. In case that the high-temperature coolant B is supplied to the mixing chamber 32, the movable temperature sensing member 39 moves to the high-temperature coolant port 33 and the protrusion 40 moves also to the high-temperature coolant port 33, as shown in FIG. 1b. As a result, the protrusion 40 can restrict the clearance between the movable temperature sensing member 39 and the high-temperature coolant inducing part 42, and thus restrict the passage of the high-temperature coolant B flowing into the mixing chamber 32. Therefore, the amount of the high-temperature coolant B flowing from the high-temperature coolant port 33 into the mixing chamber 32 is reduced. Thereby, it is possible to control the mixture ratio of the high-temperature coolant B from the engine 51 and the low-temperature coolant A from the radiator 52 only by forming the protrusion 40. Further, in case that the temperature of the high-temperature coolant B is high, the larger amount of the high-temperature coolant B is flowed to the radiator 52 to maximize cooling capacity. It is achieved with a simpler structure.

Further, the protrusion 40 may completely eliminate the clearance between the movable temperature sensing member 39 and the high-temperature coolant inducing part 42 such that the outflow amount of the high-temperature coolant B becomes zero.

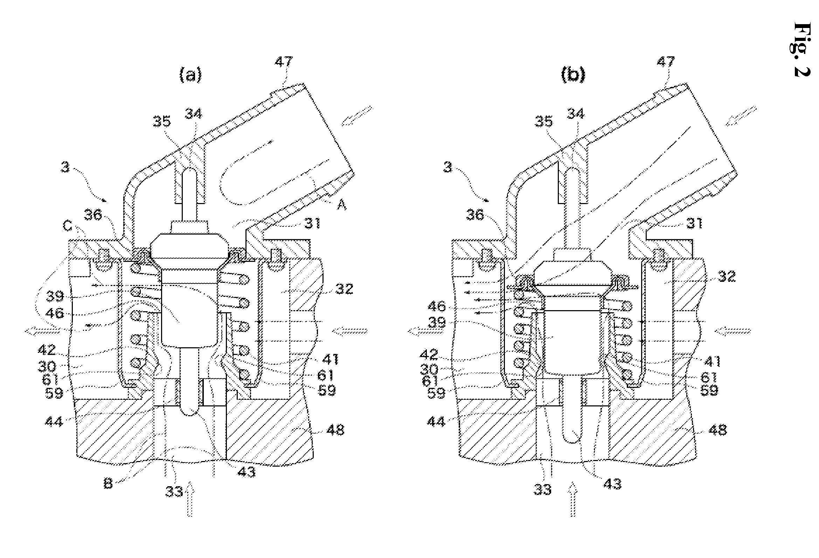

In the thermostat apparatus 3 of the present invention, for example, a diameter reducing part 61 is formed on the inner wall of the high-temperature coolant inducing part 42, as shown in FIG. 2a. The diameter reducing part 61 restricts the clearance at the periphery of the movable temperature sensing member 39, in which the high-temperature coolant B flows, and controls the inflow amount of the high-temperature coolant B from the high-temperature coolant port 33 flowing into the mixing chamber 32 without highly decreasing the flowing speed of the high-temperature coolant B. Thus, the diameter reducing part 61 allows the high-temperature coolant inducing part 42 to maintain a high-temperature coolant induction effect even on condition that the flowing amount of the high-temperature coolant B in the high-temperature coolant inducing part 42 is restricted.

Further, the diameter reducing part 61 has various shapes, including a taper shape, a concave shape, a convex shape, etc., and thus gradually tunes the inflow amount of the high-temperature coolant B when the passage of the high-temperature coolant B is restricted according to the movement of the movable temperature sensing member 39. Thereby, even in case that the passage of the high-temperature coolant B is rapidly restricted, or the high-temperature coolant port 33 and the mixing chamber 32 are completely isolated from each other, the thermostat apparatus 3 of the present invention achieves stable control of the temperature of the coolant without generating the hunting of the temperature of the coolant.

Some components or members in the drawings under FIG. 2, which are substantially the same as those in FIG. 1, are denoted by the same reference numerals, and a detailed description thereof will be omitted. The passage formed in the clearance between the movable temperature sensing member 39 and the high-temperature coolant inducing part 42 is restricted according to the movement of the movable temperature sensing member 39 by the diameter reducing part 61 formed on the inner wall of the high-temperature coolant inducing part 42, as shown in FIG. 2b. Thus, the inflow amount of the high-temperature coolant B from the high-temperature coolant port 33 into the mixing chamber 32 is reduced, and the larger amount of the high-temperature coolant B is flowed to the radiator 52 to maximize cooling capacity. Further, the mixture ratio of the high-temperature coolant B from the engine 51 and the low-temperature coolant A from the radiator 52 is controlled.

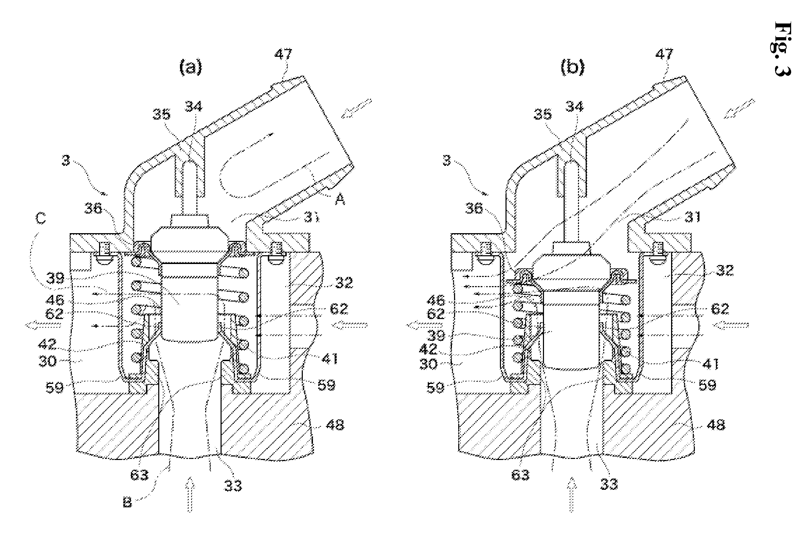

The thermostat apparatus 3 of the present invention may be applied to an embodiment, as shown in FIG. 3a.

In the embodiment, as shown in FIG. 3a, the supporting and guiding part 44 formed in the high-temperature coolant port 33 and the extension shaft 43 extended from the lower end of the movable temperature sensing member 39, which are illustrated in the embodiment, as shown in FIG. 1a, are omitted. Instead, a sliding guide 62, which supports and guides the side surface of the movable temperature sensing member 39, is provided.

The sliding guide 62 is formed by bending or pressing a steel material, and contacts the side surface of the movable temperature sensing member 39 to support the movable temperature sensing member 39. The sliding guide 62 is formed integrally with the above-described frame 59 or separately from the frame 59. A plurality of through holes (not shown) is formed through the sliding guide 62. The high-temperature coolant B flows through the plurality of through holes of the sliding guide 62. In this constitution, the high-temperature coolant B from the high-temperature coolant port 33 can be guided also to the periphery of the movable temperature sensing member 39.

In the thermostat apparatus 3 in accordance with the embodiment of FIG. 3, a diameter reducing part 63 is formed on the inner wall of the high-temperature coolant inducing part 42. The diameter reducing part 63 formed on the inner wall of the high-temperature coolant inducing part 42 restricts the passage of the high-temperature coolant B formed in the clearance between the movable temperature sensing member 39 and the high-temperature coolant inducing part 42 according to the movement of the movable temperature sensing member 39, as shown in FIG. 3b.

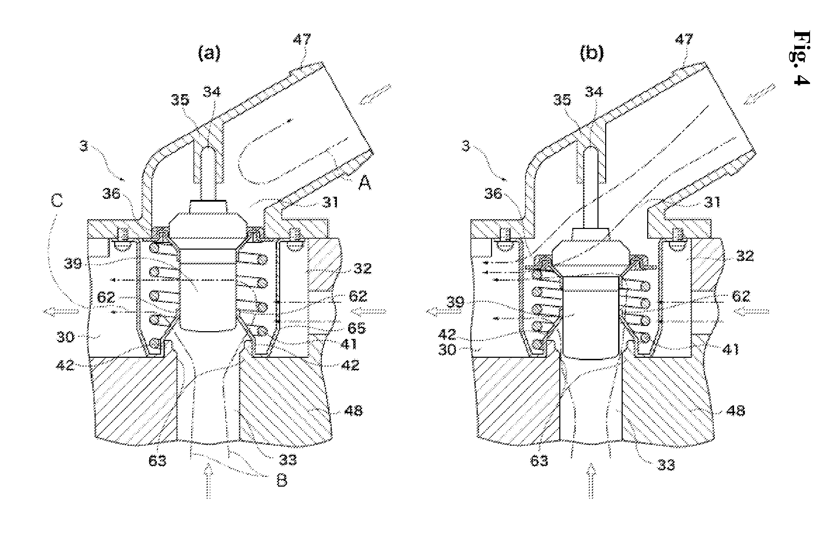

The thermostat apparatus 3 of the present invention may be applied to an embodiment, as shown in FIG. 4a.

In the embodiment, as shown in FIG. 4a, the supporting and guiding part 44 formed in the high-temperature coolant port 33 and the extension shaft 43 extended from the lower end of the movable temperature sensing member 39, which are illustrated in the embodiment, as shown in FIG. 1a, are omitted. Instead, a sliding guide 62, which supports and guides the side surface of the movable temperature sensing member 39, is provided. Further, the above-described frame 59 is omitted, and instead, a frame 65 formed integrally with the sliding guide 62 is provided. Otherwise, the frame 65 may be omitted, and only the sliding guide 62 may be provided.

In the embodiment, as shown in FIG. 4, the high-temperature coolant inducing part 42 is formed from the sliding guide 62 toward the high-temperature coolant port 33. A plurality of through holes (not shown) is formed through the sliding guide 62 and the high-temperature coolant B flows through the plurality of through holes of the sliding guide 62. However, the coolant from the mixing chamber 32 does not flow through the plurality of through holes of the sliding guide 62, and thus does not flow into the high-temperature coolant inducing part 42. Thus, only the high-temperature coolant B can flow in the high-temperature coolant inducing part 42 formed from the sliding guide 62 toward the high-temperature coolant port 33. Since the movable temperature sensing member 39 is inserted into the sliding guide 62, filled with the high-temperature coolant B, toward the high-temperature coolant port 33, the high-temperature coolant B is induced to the periphery of the movable temperature sensing member 39 and thus the above-described effect is obtained.

Further, in the thermostat apparatus 3 in accordance with this embodiment, the diameter reducing part 63 is formed on the inner wall of the high-temperature coolant inducing part 42. The diameter reducing part 63 formed on the inner wall of the high-temperature coolant inducing part 42 restricts the passage of the high-temperature coolant B formed in the clearance between the movable temperature sensing member 39 and the high-temperature coolant inducing part 42 according to the movement of the movable temperature sensing member 39, as shown in FIG. 4b.

Further, the thermostat apparatus 3 in accordance with the embodiment, as shown in FIG. 4, has a simple structure, which uses a coolant passage connected to the high-temperature coolant port 33 formed through the housing main body 48. Further, in case that the housing main body 48 is molded on an engine block, the overall structure of the thermostat apparatus 3 becomes more compact.

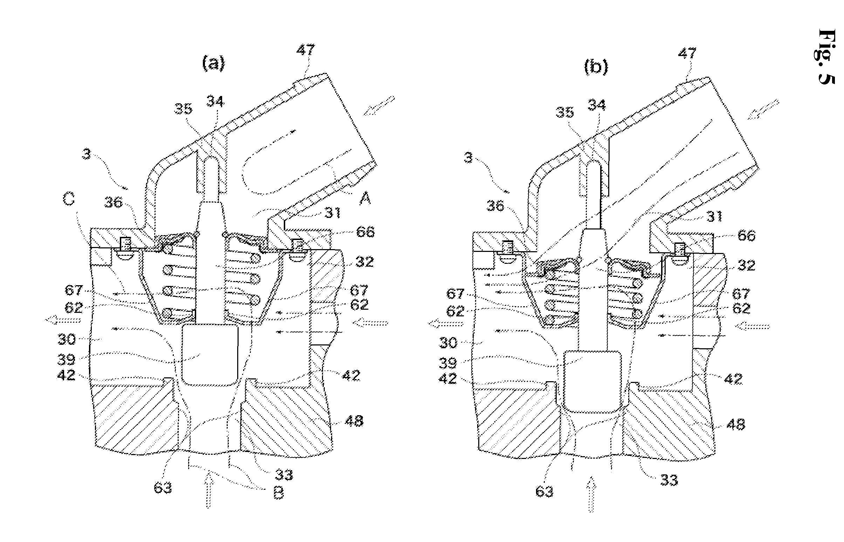

The thermostat apparatus 3 of the present invention may be applied to an embodiment, as shown in FIG. 5a.

In the embodiment, as shown in FIG. 5a, the supporting and guiding part 44 formed in the high-temperature coolant port 33 and the extension shaft 43 extended from the lower end of the movable temperature sensing member 39, which are illustrated in the embodiment, as shown in FIG. 1a, are omitted. Instead, a main valve connecting part 66 to connect the movable temperature sensing member 39 and the main valve 36 is formed integrally with the movable temperature sensing member 39. Further, a guide 67 to support and guide the main valve connecting part 66 is provided.

The main valve connecting part 66 is attached integrally to the movable temperature sensing member 39, and the main valve 36 is attached integrally to the main valve connecting part 66. Thus, when the movable temperature sensing member 39 moves to the high-temperature coolant inducing part 42, the main valve connecting part 66 moves in the same direction and thus the main valve 36 moves also. Since the guide 67 supports and guides the main valve connecting part 66, the movement of the movable temperature sensing member 39 and the main valve 36 in the upward and downward directions may be stably performed.

As shown in FIG. 5a, the main valve connecting part 66 is vertically lengthened, and the end of the main valve connecting part 66 is attached to the movable temperature sensing member 39. Further, the height of the upper end of the high-temperature coolant inducing part 42 is lowered. As a result, the movable temperature sensing member 39 is disposed adjacent to the outlet of the high-temperature coolant port 33, and thus the high-temperature coolant B discharged from the high-temperature coolant port 33 is induced to the periphery of the movable temperature sensing member 39. Further, the height of the upper end of the high-temperature coolant inducing part 42 is properly tuned according to requirements of the thermostat apparatus 3 of the present invention located in a cooling system.

Further, in the thermostat apparatus 3 in accordance with this embodiment, the diameter reducing part 63 is formed on the inner wall of the high-temperature coolant inducing part 42. The diameter reducing part 63 formed on the inner wall of the high-temperature coolant inducing part 42 restricts the passage of the high-temperature coolant B formed in the clearance between the movable temperature sensing member 39 and the high-temperature coolant inducing part 42 according to the movement of the movable temperature sensing member 39, as shown in FIG. 5b.

Particularly, in the embodiment, as shown in FIG. 5b, the passage of the high-temperature coolant B of the high-temperature coolant port 33, nearly as it is, forms the high-temperature coolant inducing part 42, and the high-temperature coolant inducing part 42 has a simpler structure. Further, the high-temperature coolant B from the high-temperature coolant port 33 more effectively transmits heat to the overall surface of the movable temperature sensing member 39 through the high-temperature coolant inducing part 42 without any obstacle. Particularly, in case that the housing main body 48 is molded on an engine block, the overall structure of the thermostat apparatus 3 becomes more compact.

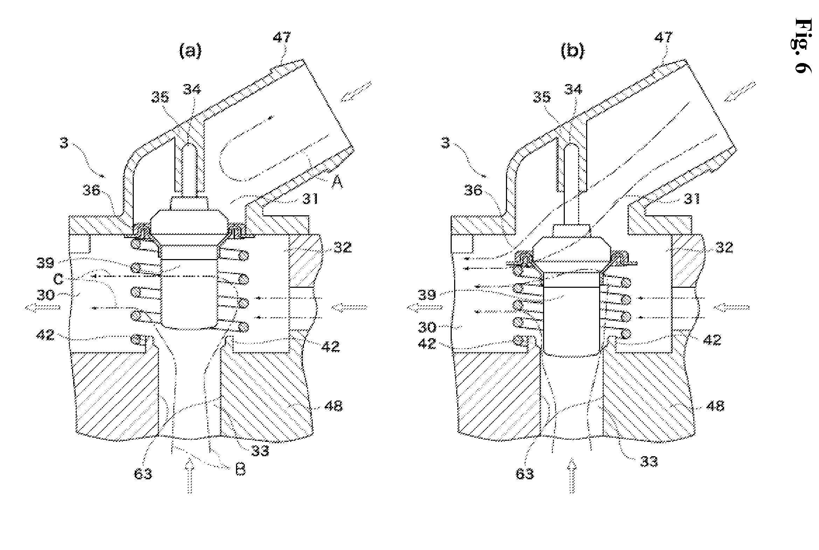

The thermostat apparatus 3 of the present invention may be applied to an embodiment, as shown in FIG. 6a.

In the embodiment, as shown in FIG. 6a, the supporting and guiding part 44 formed in the high-temperature coolant port 33 and the extension shaft 43 extended from the lower end of the movable temperature sensing member 39, which are illustrated in the embodiment, as shown in FIG. 1a, are omitted. Instead, the piston shaft 34 is more firmly fixed to the piston shaft supporting part 35. Thus, the movable temperature sensing member 39 can move in the upward and downward directions in a stable state without rolling from side to side.

Further, in the thermostat apparatus 3 in accordance with this embodiment, the diameter reducing part 63 is formed on the inner wall of the high-temperature coolant inducing part 42. The diameter reducing part 63 formed on the inner wall of the high-temperature coolant inducing part 42 restricts the passage of the high-temperature coolant B formed in the clearance between the movable temperature sensing member 39 and the high-temperature coolant inducing part 42 according to the movement of the movable temperature sensing member 39, as shown in FIG. 6b.

The embodiments, as shown in FIGs. 4, 5, and 6, allow the passage of the high-temperature coolant B formed in the engine block to serves as a high-temperature coolant inducing part, thus reducing processing and material costs in production.

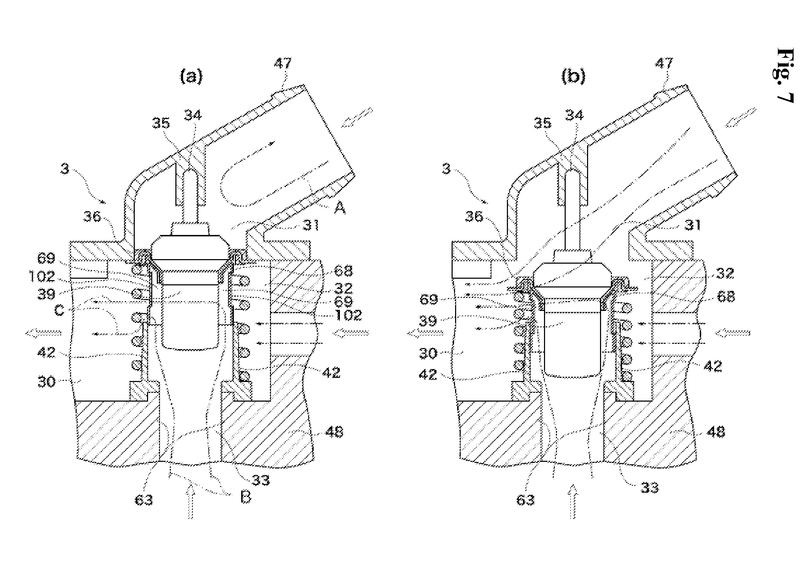

The thermostat apparatus 3 of the present invention may be applied to an embodiment, as shown in FIG. 7a.

In the embodiment, as shown in FIG. 7a, the supporting and guiding part 44 formed in the high-temperature coolant port 33 and the extension shaft 43 extended from the lower end of the movable temperature sensing member 39, which are illustrated in the embodiment, as shown in FIG. 1a, are omitted. Instead, a guide tube 68 is disposed around the movable temperature sensing member 39.

The high-temperature coolant inducing part 42 has a cylindrical shape, and is configured such that the guide tube 68 can be smoothly inserted into the high-temperature coolant inducing part 42 through an opening formed through the upper portion thereof. That is, since the guide tube 68 is guided by the high-temperature coolant inducing part 42, into which the guide tube 68 is inserted, the movable temperature sensing member 39 can move in the upward and downward directions in a stable state.

Although the embodiment, as shown in FIG. 7, illustrates the guide tube 68 inserted into the cylindrical high-temperature coolant inducing part 42, the guide tube 68 may be fixed to the outer surface of the high-temperature coolant inducing part 42.

Further, the guide tube 68 forms an induction passage 69, which induces the high-temperature coolant B supplied from the high-temperature coolant port 33 to the periphery of the movable temperature sensing member 39 and then guides the high-temperature coolant B to the mixing chamber 32. The high-temperature coolant B flowing through the induction passage flows into the mixing chamber 32 via through holes 102 formed through the wall of the guide tube 68.

When the movable temperature sensing member 39 moves, the flowing passage of the high-temperature coolant B into the mixing chamber 32 is narrowed due to the position relation between the through holes 102 and the high-temperature coolant inducing part 42. Thus, the amount of the high-temperature coolant B flowing from the high-temperature coolant port 33 into the mixing chamber 32 can be reduced. The mixture ratio of the high-temperature coolant B from the engine 51 and the low-temperature coolant A from the radiator 52 is controlled by disposing the guide tube 68, as described above. Further, when the temperature of the high-temperature coolant B is high, the larger amount of the high-temperature coolant B is returned to the radiator 52 to maximize cooling capacity.

Further, the length of the guide tube 68 may be further extended to the high-temperature coolant port 33 to serve to exhibit some of the principal functions of the high-temperature coolant inducing part. In this case, the amount of the high-temperature coolant B flowing in the induction passage 69 formed in the guide tube 68 is easily reduced.

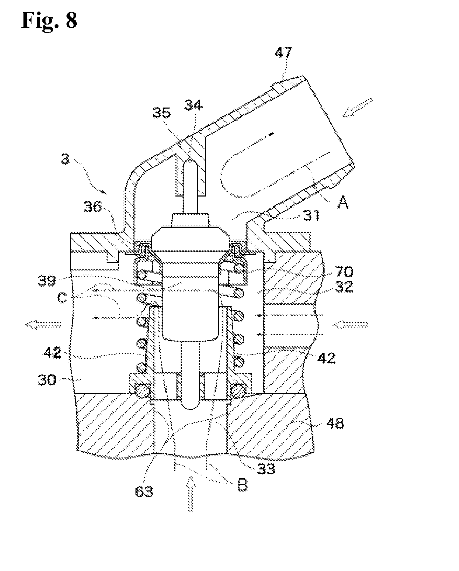

The thermostat apparatus 3 of the present invention may be applied to an embodiment, as shown in FIG. 8.

In the embodiment, as shown in FIG. 8, a deflector 70 extended from the main valve 36 is further provided in addition to the components in the embodiment, as shown in 1a. The deflector 70 surrounds the outer circumferential surface of the movable temperature sensing member 39 such that the deflector 70 is separated from the outer circumferential surface of the movable temperature sensing member 39 at a designated interval. Although FIG. 8 illustrates the deflector 70 disposed at the outside of the main spring, the deflector 70 may be disposed inside the main spring. The above deflector 70 induces the flow of the high-temperature coolant B induced along the inner wall of the cylindrical high-temperature coolant inducing part 42 to the periphery of the movable temperature sensing member 39. Further, the deflector 70 prevents the low-temperature coolant A from contacting the movable temperature sensing member 39.

Further, when the movable temperature sensing member 39 moves, the flowing passage of the high-temperature coolant B into the mixing chamber 32 is narrowed due to the position relation between the lower end of the deflector 70 and the upper end of the high-temperature coolant inducing part 42. As a result, the amount of the high-temperature coolant B flowing from the high-temperature coolant port 33 into the mixing chamber 32 can be reduced. Thus, the mixture ratio of the high-temperature coolant B from the engine 51 and the low-temperature coolant A from the radiator 52 can be controlled by installing the deflector 70. Further, when the temperature of the high-temperature coolant B is high, the larger amount of the high-temperature coolant B is returned to the radiator 52 to maximize cooling capacity.

The thermostat apparatus 3 of the present invention is not limited to the above-described control method, but may be applied to an outlet control method.

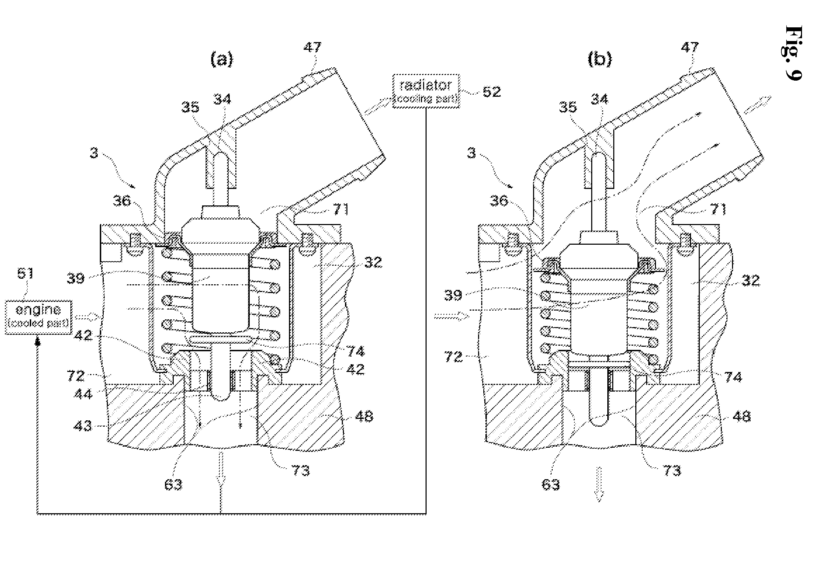

FIG. 9a shows the overall structure of the thermostat apparatus 3, which is applied to the outlet control method. The thermostat apparatus 3 includes an engine connection port 72, through which a high-temperature coolant heated by the engine 51 flows into the thermostat apparatus 3, a bypass port 73, through which the coolant is returned to the engine 51, and a radiator connection port 71, through which the coolant is discharged to a radiator. Some components or members in FIG. 9a, which are substantially the same as those in FIG. 1, are denoted by the same reference numerals, and a detailed description thereof will be omitted.

In the thermostat apparatus 3 of FIG. 9a, a bypass valve 74 is fixed to the extension shaft 43. Thus, the passage of the coolant flowing to the bypass port 73 is closed by the bypass valve 74 according to the movement of the movable temperature sensing member 39, as shown in FIG. 9b. Thereby, the amount of the coolant can be controlled.

Further, the high-temperature coolant inducing part 42 has a cylindrical shape, the height of which is adjusted, such that the high-temperature coolant inducing part 42 is exposed to the engine connection port 72 regardless of the operating state of the movable temperature sensing member 39. Thus, the coolant supplied from the engine connection port 72 is induced directly to the movable temperature sensing member 39, and the movable temperature sensing member 39 moves in the upward and downward directions based on the temperature of the high-temperature coolant.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**Claims**

1. A thermostat apparatus having a low-temperature coolant port, through which a low-temperature coolant cooled by a radiator flows into a mixing chamber; a high-temperature coolant port, through which a high-temperature coolant heated by an engine flows into the mixing chamber; and a coolant discharge port, through which a coolant obtained by mixing the low-temperature coolant and the high-temperature coolant in the mixing chamber is discharged to the engine, comprising:

   a piston shaft provided with one end fixed to a piston shaft supporting part disposed at the side of the low-temperature coolant port, and the other end extended to the high-temperature coolant port;
   a movable temperature sensing member fixed to the other end of the piston shaft to sense the temperature of the high-temperature coolant flowing from the high-temperature coolant port and move toward the high-temperature coolant port based on the sensed temperature;
   a main valve fixed integrally with the movable temperature sensing member to connect the low-temperature coolant port and the mixing chamber according to the movement of the movable temperature sensing member toward the high-temperature coolant port and thus control the amount of the low-temperature coolant flowing from the low-temperature coolant port into the mixing chamber; and
   a high-temperature coolant inducing part connected to the high-temperature coolant port, surrounding the entire or a portion of the movable temperature sensing member, and provided with an opening part at a position adjacent to the movable temperature sensing member to induce the high-temperature coolant from the high-temperature coolant port to the periphery of the movable temperature sensing member and then discharge the high-temperature coolant to the mixing chamber.

2. The thermostat apparatus according to claim 1, wherein the high-temperature coolant inducing part has a cylindrical shape such that the movable temperature sensing member can be loosely inserted into the high-temperature coolant inducing part.

3. The thermostat apparatus according to claim 1 or 2, wherein a supporting and guiding part to support and guide an extension shaft extended from the movable temperature sensing member toward the high-temperature coolant port is formed in the high-temperature coolant port.

4. The thermostat apparatus according to claim 1 or 2, further comprising a sliding guide to support and guide the side surface of the movable temperature sensing member,

wherein through holes causing the high-temperature coolant from the high-temperature coolant port to flow into the mixing chamber are formed through the sliding guide.

5. The thermostat apparatus according to claim 4, wherein a portion of the sliding guide at the side of the high-temperature coolant port induces the high-temperature coolant from the high-temperature coolant port to the periphery of the movable temperature sensing member.

6. The thermostat apparatus according to claim 1 or 2, further comprising a main valve connecting part formed integrally with the movable temperature sensing member to connect the movable temperature sensing member and the main valve, and a guide to support and guide the main valve connecting part,
wherein the length of the main valve connection part is adjusted such that the position of the movable temperature sensing member is extended to the high-temperature coolant outlet of the high-temperature coolant port.

7. The thermostat apparatus according to claim 1 or 2, further comprising a guide tube disposed around the movable temperature sensing member,
wherein the high-temperature coolant inducing part has a cylindrical shape to support and guide the guide tube, and the guide tube forms an induction passage to induce the high-temperature coolant supplied from the high-temperature coolant port to the periphery of the movable temperature sensing member and then guide the high-temperature coolant to the mixing chamber.

8. The thermostat apparatus according to claim 2, wherein a protrusion corresponding to the shape of a clearance between the movable temperature sensing member and the high-temperature coolant inducing part is formed on the outer circumferential surface of the movable temperature sensing member.

9. The thermostat apparatus according to claim 1 or 2, wherein a diameter reducing part is formed on the inner wall of the high-temperature coolant inducing part, and a clearance between the movable temperature sensing member and the high-temperature coolant inducing part is restricted according to the movement of the movable temperature sensing member.

10. The thermostat apparatus according to claim 1 or 2, further comprising a deflector extended from the main valve, and surrounding the outer circumferential surface of the movable temperature sensing member such that the deflector is separated from the outer circumferential surface of the movable temperature sensing member at a designated interval.

11. The thermostat apparatus according to claim 1 or 2, further comprising an elastic support member fixed to the outer circumferential surface of the high-temperature coolant inducing part to press the main valve toward the low-temperature coolant port.

12. A thermostat apparatus having an engine connection port, through which a high-temperature coolant heated by an engine flows into the thermostat apparatus; a bypass port, through which the coolant is returned to the engine; and a radiator connection port, through which the coolant is discharged to a radiator, comprising:

a piston shaft provided with one end fixed to a piston shaft supporting part disposed at the side of the radiator connection port, and the other end extended to the bypass port;
a movable temperature sensing member fixed to the other end of the piston shaft to sense the temperature of the high-temperature coolant flowing from the engine connection port and move toward the bypass port based on the sensed temperature;
a main valve fixed integrally with the movable temperature sensing member to open the radiator connection port and the engine connection port according to the movement of the movable temperature sensing member toward the bypass port and thus control the amount of the low-temperature coolant flowing from the engine connection port to the radiator connection port; and
a high-temperature coolant inducing part connected to the bypass port to induce the high-temperature coolant from the engine connection port to the periphery of the movable temperature sensing member and then discharge the high-temperature coolant to the bypass port.

13. The thermostat apparatus according to claim 12, further comprising a bypass valve disposed at the piston shaft toward the high-temperature coolant port,
wherein the high-temperature coolant inducing part has a cylindrical shape, the height of which is adjusted, such that the high-temperature coolant inducing part is exposed to the engine connection port at any time, and the bypass valve is inserted into the high-temperature coolant inducing part according to the operating state of the movable temperature sensing member.

Fig. 1

# Fig. 2

Fig. 3

# Fig. 4

# Fig. 5

# Fig. 6

**Fig. 7**

Fig. 8

**Fig. 9**

**Fig. 10**

## Fig. 11

# Fig. 12

the present invention

the prior art

closing position of bypass valve

opening degree of main valve

temperature of coolant

## INTERNATIONAL SEARCH REPORT

| International application No. |
| --- |
| PCT/JP2007/053327 |

**A. CLASSIFICATION OF SUBJECT MATTER**
*F01P7/16*(2006.01)i, *F16K31/68*(2006.01)i

According to International Patent Classification (IPC) or to both national classification and IPC

**B. FIELDS SEARCHED**

Minimum documentation searched (classification system followed by classification symbols)
F01P7/16, F16K31/68

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | Microfilm of the specification and drawings annexed to the request of Japanese Utility Model Application No. 058877/1985(Laid-open No. 175534/1986)<br>(Toyoda Automatic Loom Works, Ltd.),<br>01 November, 1986 (01.11.86),<br>Full text<br>(Family: none) | 1,2,4-7,11<br>3,8-10,12 |
| Y<br>A | JP 2005-330920 A  (Nippon Thermostat Co., Ltd.),<br>02 December, 2005 (02.12.05),<br>Full text<br>& WO 2005/113958 A1 | 1,2,4-7,11<br>3,8-10,12 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>13 March, 2007 (13.03.07) | Date of mailing of the international search report<br>20 March, 2007 (20.03.07) |
| --- | --- |
| Name and mailing address of the ISA/<br>Japanese Patent Office | Authorized officer |
| Facsimile No. | Telephone No. |

Form PCT/ISA/210 (second sheet) (April 2005)

| INTERNATIONAL SEARCH REPORT | International application No. |
|---|---|
| | PCT/JP2007/053327 |

C (Continuation).   DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 120420/1985(Laid-open No. 028985/1987) (Mazda Motor Corp.), 21 February, 1987 (21.02.87), Full text (Family: none) | 11 |
| A | Microfilm of the specification and drawings annexed to the request of Japanese Utility Model Application No. 079686/1989(Laid-open No. 019427/1991) (Daihatsu Motor Co., Ltd.), 26 February, 1991 (26.02.91), Full text (Family: none) | 1-12 |
| A | JP 2004-263586 A  (Aisin Seiki Co., Ltd.), 24 September, 2004 (24.09.04), Full text (Family: none) | 1-12 |

Form PCT/ISA/210 (continuation of second sheet) (April 2005)

**EP 1 998 019 A1**

## REFERENCES CITED IN THE DESCRIPTION

### Patent documents cited in the description

- JP H25672 A
- JP H637524 B
- JP H1019160 B
- JP S4716584 B